# EUROPÄISCHE PATENTANMELDUNG

(11) **EP 1 553 152 A2**
(43) Veröffentlichungstag der Anmeldung: **13.07.2005**
(21) Anmeldenummer: 04030574.0
(22) Anmeldetag: 23.12.2004
(51) Int. Cl.: C09K 3/18

(54) **Enteisungsmittel und Vereisungsschutzmittel, verdickt mit Schichtsilikaten**

(30) Priorität: 09.01.2004 DE 102004001409
(71) Anmelder: Clariant GmbH, 65929 Frankfurt am Main (DE)
(72) Erfinder: Jeschke, Ingo, Dr., 84508 Burgkirchen (DE); Stankowiak, Achim, Dr., 84503 Altötting (DE); Golub, Mirjana, 84508 Burgkirchen (DE); Frauenhuber, Sabine, 5231 Schalchen (AT)
(74) Vertreter: Mikulecky, Klaus, Dr.

(57) **Zusammenfassung**

Gegenstand der Erfindung ist ein Enteisungs- oder Vereisungsschutzmittel, enthaltend 35 bis 93 Gew.-% mindestens eines Glykols und 0,01 bis 15 Gew.-% mindestens eines wasserlöslichen Schichtsilicats, sowie Wasser ad 100 Gew.-%, bezogen auf das Gewicht des Enteisungsmittels.

## Beschreibung

Die vorliegende Erfindung betrifft mit Schichtsilicaten verdickte Wasser/Glykolgemische, die als Enteisungsmittel und Vereisungsschutzmittel eingesetzt werden können. Diese Gemische dienen zur Entfernung gefrorener Niederschläge wie Eis und Schnee von Oberflächen, sowie zur Vermeidung einer Wiedervereisung dieser Oberflächen.

Besondere Bedeutung haben Enteisungsmittel und Vereisungsschutzmittel für die Behandlung von Flugzeugoberflächen. Während des Flugzeugstarts sollen diese Fluide durch die dabei auftretenden Scherspannungen von den Flugzeugoberflächen abfließen. Der Einfachheit halber wird die Gesamtheit dieser Fluide im folgenden als Flugzeugenteisungsmittel oder Enteisungsmittel bezeichnet.

Während der Wintermonate können Flugzeugoberflächen durch gefrorene Niederschläge belegt werden. Diese gefrorenen Niederschläge müssen vor dem Start des Flugzeugs entfernt werden, da sie zu einer starken Beeinträchtigung des für den Start nötigen Auftriebs führen.

Man unterscheidet zwischen Enteisungsmitteln, die vorwiegend zur Entfernung gefrorener Niederschläge eingesetzt werden, und Vereisungsschutzmitteln, die auf bereits enteisten und somit gereinigten Flugzeugoberflächen einer Wiedervereisung entgegenwirken sollen.

Im allgemeinen werden zur Entfernung gefrorener Niederschläge Enteisungsmittel auf Wasser/Glykolbasis verwendet. Das Glykol dient als gefrierpunktsabsenkendes Medium. Zusätzlich sind Tenside enthalten, welche die Oberflächenspannung des Enteisungsmittels herabsetzen und somit die Benetzung der Flugzeugoberflächen verbessern. Außerdem können Enteisungsmittel Korrosionsinhibitoren, Entschäumer, Farbstoffe und flammhemmende Substanzen enthalten. Solche nicht-verdickten Enteisungsmittel zeichnen sich durch Newtonsches Fließverhalten aus. Das bedeutet, dass ihre Viskosität scherunabhängig ist. Entsprechend der SAE (Society of Automotive Engineering)-Konvention werden nicht-verdickte Enteisungsmittel mit Newtonschem Fließverhalten als Typ I-Fluide bezeichnet. Typ I-Fluide werden je nach Außentemperatur mit einer unterschiedlichen Menge Wasser verdünnt und mit Sprühfahrzeugen heiß auf die Flugzeugoberflächen aufgetragen. Mit ihrer Hilfe lassen sich gefrorene Ablagerungen effektiv entfernen. Allerdings weisen Typ I-Fluide nur einen sehr begrenzten Schutz vor Wiedervereisung auf.

Im Gegensatz zu reinen Enteisungsmitteln enthalten Vereisungsschutzmittel zusätzlich noch Verdickersubstanzen. Die dadurch verursachte Viskosität dieser Fluide verbessert den Schutz vor Wiedervereisung, denn das Fluid fließt im Ruhezustand nur sehr langsam von den Flugzeugoberflächen ab und kann somit über einen längeren Zeitraum gefrierende Niederschläge absorbieren. Vereisungsschutzmittel erhalten durch die dabei eingesetzten Verdickungsmittel ein Nicht-Newtonsches, pseudoplastisches Fließverhalten. Die Viskosität dieser Fluide ist scherabhängig. Im Moment des Flugzeugstarts sinkt die Viskosität des Fluids durch den zunehmenden Luftwiderstand sehr stark ab und es kann somit rasch von den Flugzeugoberflächen abfließen. Je nach Vereisungsschutzzeit unterscheidet man zwischen Typ II- und Typ IV-Fluiden. Typ III-Fluide zeichnen sich durch ein besonders pseudo-plastisches Fließverhalten aus, so dass sie zur Enteisung von Flugzeugen mit geringer Startgeschwindigkeit dienen.

Flugzeugenteisungsmittel müssen einer großen Zahl von Anforderungen genügen. Gemäß der SAE-Spezifikationen AMS (Aerospace Material Standards) 1424 und AMS 1428 werden nicht nur das Abfließverhalten und die Vereisungsschutzzeit untersucht, sondern auch viele weitere physikalische Eigenschaften.

Dazu zählt beispielsweise die Lagerstabilität von Flugzeugenteisungsmitteln. Die Viskosität der Flugzeugenteisungsmittel darf sich während der Lagerung über einen längeren Zeitraum nicht ändern. Ein gutes Flugzeugenteisungsmittel darf nicht korrosiv sein, vor allem nicht gegenüber Aluminium, Magnesium, Stahl und Acrylglas. Es muss umweltverträglich sein und darf keine Brände unterstützen.
Zusätzlich müssen verdickte Flugzeugenteisungsmittel scherstabil sein. Die Fluide werden mit Sprühfahrzeugen aufgetragen, die eine hohe mechanische Belastung des Fluids verursachen. Die Enteisungsmittel dürfen dabei nicht mehr als 20 % ihrer ursprünglichen Viskosität verlieren. Schließlich dürfen Reste von Flugzeugenteisungsmitteln, die sich nach dem Start des Flugzeugs in aerodynamisch ruhigen Zonen der Tragflächen angesammelt haben und somit nicht abfließen konnten, keine Gelablagerungen bilden. Bei den beiden letztgenannten Eigenschaften besteht ein weiterer Entwicklungsbedarf.

US-4 954 279 beschreibt die Mikroemulsion eines Öls in einem Wasser/Glykolgemisch. Zusätzlich sind Verdickungsmittel und Tenside enthalten. Da alle Komponenten in einer Mikroemulsion vorliegen, werden wichtige Fluideigenschaften wie die Lagerstabilität, vor allem bei sehr niedrigen Temperaturen verbessert.

US-5 118 435 offenbart ein Enteisungsmittel, basierend auf der synergistischen Wirkung, die durch die Kombination von zwei Polyacrylaten als Verdicker erreicht wird. Die Viskosität des Fluids ist temperaturunabhängig, so dass die Filmdicke des aufgebrachten Enteisungsmittels bei jeder möglichen Außentemperatur gering ist, und das Fluid somit beim Start des Flugzeugs stets gut abfließt.

US-5 273 673 offenbart Enteisungsmittel, die durch einen Gehalt an Alkylphenolethoxylaten deutlich verbesserte Vorhaltezeiten aufweisen.
US-5 386 968 offenbart, dass die gleiche Tensidklasse zu einer Verbesserung der Vorhaltezeit verdünnter unverdickter Flugzeugenteisungsmittel geeignet ist.

US-5 334 323 offenbart, dass die Neutralisierung der als Verdicker dienenden Polyacrylsäure mit einem Gemisch aus NaOH und KOH durchgeführt werden kann. Dadurch ist das Flugzeugenteisungsmittel besonders tiefviskos und fließt gut ab.

US-5 750 047 offenbart, dass die Vereisungsschutzzeit verdickter Enteisungsmittel durch Polyacrylate beträchtlich zu steigern ist.

US-5 772 912 offenbart umweltfreundliche Enteisungsmittel für die unterschiedlichsten Anwendungen, die auf Xanthan als Verdicker basieren.

US-5 817 252 offenbart die Kombination von zwei nicht-ionischen Tensiden mit unterschiedlichem HLB-Wert, um die Diffusion des gefrierenden Niederschlags zu kontrollieren, so dass das Enteisungsmittel länger wirksam bleibt. Das gleiche Prinzip kann nach US-5 935 488 auf SAE Typ II-Fluide angewendet werden.

Aus dem Stand der Technik wird deutlich, dass man sich bei der Entwicklung von Flugzeugenteisungsmitteln bisher fast ausschließlich auf eine Verbesserung der Vorhaltezeit und des Abfließverhaltens konzentriert hat.

Bisher werden zur Synthese verdickter Flugzeugenteisungsmittel ausschließlich Verdicker auf organischer Basis eingesetzt. Solche sind vorzugsweise vernetzte Homo- oder Copolymerisate von ungesättigten Carbonsäuren wie Acrylsäure, Methacrylsäure und deren Derivate wie Ester und Amide, ferner Celluloseether (Alkyl-, Hydroxyalkyl- und Carboxyalkylcellulose-ether), Polyethylenglykole, Polyvinylpyrrolidone, Polyvinylalkohole, Polyethylenoxide, Xanthangummi und dergleichen oder Mischungen von solchen wasserlöslichen Polymeren. Der Verdickungsmechanismus all dieser organischen Polymere beruht auf der Ausbildung eines Polymernetzwerkes in der Glykollösung.

Jedoch werden alle hier genannten Verdickungsmittel bei mechanischer Belastung mehr oder weniger stark irreversibel geschädigt. Das zeigt sich durch einen irreversiblen Viskositätsverlust bei starker Scherbeanspruchung durch schnelllaufende Rührgeräte, Pumpen oder beim Fließen durch kleine Leitungsquerschnitte. Die mechanische Belastung bedingt einen Bruch der Polymerketten und damit verbunden eine irreversible Schädigung des Polymernetzwerkes.

Es besteht daher die Aufgabe, Flugzeugenteisungsmittel gleichzeitig so zu konzipieren, dass sie bei mechanischer Belastung wie Pumpen oder Versprühen mit Sprühgeräten möglichst wenig Viskosität verlieren.

Zusätzlich neigen alle hier genannten Verdickungsmittel unter bestimmten äußeren Bedingungen zu einer Gelbildung. Sammeln sich Flugzeugenteisungsmittel nach dem Start in aerodynamisch ruhigen Bereichen des Flugzeuges an, so trocknen diese Rückstände durch den geringen Luftdruck in Flughöhen ab 5.000 m vollständig ein. Diese Rückstände können stark aufquellen, falls sie mit Feuchtigkeit wie Regenwasser in Kontakt kommen. Die daraus resultierenden Gele können bei tiefen Temperaturen, wie sie in großen Flughöhen auftreten, einfrieren und dadurch die Höhenruder blockieren, wodurch das Flugzeug nicht mehr vollständig manövrierfähig ist.

Alle auf herkömmlichen Verdickungsmitteln basierenden Flugzeugenteisungsmittel bilden deutlich sichtbare Mengen an Gelrückständen. Je nach Verdickertyp lassen sich diese Gele im Laufe der Rehydratisierung mit dem Wasser mehr oder weniger gut ablösen. Wünschenswert wäre ein Fluidrückstand, der sich innerhalb der ersten Tauchvorgänge durch das Wasser vollständig abspülen ließe.

Daher besteht auch die Aufgabe, Flugzeugenteisungsmittel so zu formulieren, dass eingetrocknete Fluidreste mit Regenwasser keine Gelrückstände bilden können.

Überraschend wurde nun gefunden, dass Vereisungsschutzmittel, welche neben den allgemein üblichen, bekannten Bestandteilen von Vereisungsschutzmitteln, wie beispielsweise Glykole, Tenside, basische und saure Verbindungen zur Regulierung des pH-Wertes und Korrosionsschutzmittel gleichzeitig Schichtsilicate als Verdickungsmittel enthalten, bei mechanischer Belastung keinen Viskositätsverlust zeigen. Zusätzlich bilden diese Vereisungsschutzmittel nach dem Austrocknen nur solche Rückstände, die sich nach der Rehydratisierung vollständig in Wasser auflösen und somit keine schwerlöslichen Gele bilden.

Es handelt sich bei diesen Verdickern um wasserlösliche Schichtsilicate, die beispielsweise der Mineralfamilie der Smektite angehören, zu denen sowohl natürlich vorkommende, wie synthetisch erzeugte Hectorite und Bentonite, bzw. Montmorillonite zählen. Diese anorganischen Verdickungsmittel zeichnen sich dadurch aus, dass sie Wasser und organische Moleküle wie Glykole zwischen den Silikatschichten einlagern können, so dass sie als Verdickungsmittel für wässrige Systeme dienlich sind.

Flugzeugenteisungsmittel auf Basis dieser Verdickungsmittel erfüllen nicht nur die Forderung nach einer hohen Ruheviskosität und Fließgrenze bei gleichzeitig gut ausgeprägter Pseudoplastizität, sondern sie sind bei mechanischer Beanspruchung zusätzlich ausgesprochen scherstabil. Darüber hinaus lassen sich ausgetrocknete Rückstände dieser Flugzeugenteisungsmittel mit Hilfe von Wasser vollständig auflösen und bilden keine schwerlöslichen Gele. Diese Schichtsilicate lassen sich entweder alleine oder auch in Kombination mit den oben genannten organischen Verdickungsmitteln einsetzen. Dabei fällt auf, dass sich die Einsatzkonzentrationen der oben genannten organischen Verdickungsmittel stark absenken lassen, falls diese in Kombination mit Schichtsilicaten verwendet werden.

Gegenstand der vorliegenden Erfindung ist somit ein Enteisungs- oder Vereisungsschutzmittel, enthaltend 35 bis 93 Gew.-% mindestens eines Glykols und 0,01 bis 15 Gew.-% mindestens eines wasserlöslichen Schichtsilicats, sowie Wasser ad 100 Gew.-%, bezogen auf das Gewicht des Enteisungsmittels.

Ein weiterer Gegenstand der Erfindung ist die Verwendung von 0,01 bis 15 Gew.-% mindestens eines wasserlöslichen Schichtsilicats zur Verdickung einer Zusammensetzung, welche 35 bis 93 Gew.-% mindestens eines Glykols und Wasser ad 100 Gew.-% enthält.

Ein weiterer Gegenstand der Erfindung ist ein Verfahren zur Verdickung eines Enteisungs- oder Vereisungsschutzmittels, welches 35 bis 93 Gew.-% mindestens eines Glykols und Wasser ad 100 Gew.-% enthält, indem man ihm 0,01 bis 15 Gew.-% mindestens eines wasserlöslichen Schichtsilicats zusetzt.

Die erfindungsgemäßen Enteisungs- und Vereisungsschutzmittel sind besonders gut für die Enteisung von Flugzeugen geeignet. Sie sind aber für auch für die Enteisung und den Vereisungsschutz anderer Verkehrsmittel wie Kraftfahrzeuge oder Bahnen geeignet, oder für beliebige Oberflächen, auf denen ein Vereisungsschutz bestehen soll.

Die erfindungsgemäßen Enteisungs- und Vereisungsschutzmittel (im folgenden "Enteisungsmittel" genannt) können neben Glykol, Wasser und wasserlöslichen Schichtsilicaten weitere Bestandteile enthalten. Solche weiteren Bestandteile sind beispielsweise Tenside, Korrosionsinhibitoren, basische Verbindungen oder saure Verbindungen zur pH-Einstellung und weitere, organische Verdickungsmittel. So kann ein erfindungsgemäßes Enteisungsmittel in einer bevorzugten Ausführungsform folgende Bestandteile enthalten:
a) 35 bis 93 Gew.-%, vorzugsweise 45 bis 90 Gew.-% von mindestens einem Glykol aus der Gruppe der Alkylenglykole mit 2 bis 3 C-Atomen und Oxalkylenglykole mit 4 bis 6 C-Atomen,
b) 0 bis 10 Gew.-%, vorzugsweise 0,02 bis 2 Gew.-%, von mindestens einem Tensid aus der Gruppe der nichtionischen oder anionischen Tenside,
c) 0,01 bis 5 Gew.-%, vorzugsweise 0,02 bis 2 Gew.-% mindestens eines Korrosionsinhibitors,
d) 0,02 bis 15 Gew.-%, vorzugsweise 0,05 bis 10 Gew.-% eines wasserlöslichen Schichtsilicats,
e) gegebenenfalls mindestens eine basische Verbindung aus der Gruppe der Alkalimetallcarbonate, Alkalimetallhydroxide oder Amine zur Einstellung des pH-Wertes zwischen 6 und 11,
f) gegebenenfalls mindestens eine saure Verbindung aus der Gruppe der anorganischen oder organischen Säuren zur Einstellung des pH-Wertes zwischen 6 und 11,
g) gegebenenfalls zusätzliche organische Verdickungsmittel aus der Gruppe der Homo- oder Copolymerisate von ungesättigten Carbonsäuren wie Acrylsäure, Methacrylsäure und deren Derivate wie Ester und Amide, ferner Celluloseether (Alkyl-, Hydroxyalkyl- und Carboxyalkylcellulose-ether), Polyethylenglykole, Polyvinylpyrrolidone, Polyvinylalkohole, Polyethylenoxide, Xanthangummi und
h) Wasser als Rest auf 100 Gew.-%.

Gewichtsprozente sind stets bezogen auf das Gewicht des Enteisungsmittels.

Die Bestandteile b, c, e, f und g sind nicht zwingend in dem erfindungsgemäßen Enteisungsmittel enthalten. Bevorzugte Enteisungsmittel enthalten neben den Bestandteilen a, d und h einen oder mehrere weitere Bestandteile ausgewählt aus b, c, e, f und g.

Die Komponente a) des erfindungsgemäßen Enteisungsmittels ist vorzugsweise Ethylenglykol, Propylenglykol (1,2-Propylenglykol oder 1,3-Propylenglykol), Diethylenglykol, Dipropylenglykol oder eine Mischung von zwei oder mehreren dieser Glykole, wobei Propylenglykole besonders bevorzugt sind. Die Glykole dienen vor allem zur Absenkung des Gefrierpunkts und stellen neben Wasser die Hauptkomponente des Enteisungsmittels dar.

Die Komponente b) kann vorzugsweise ein Fettalkohol mit 6 bis 24 C-Atomen, vorzugsweise 8 bis 18 C-Atomen im Alkylrest oder ein Alkoxylat davon mit 1 bis 10, vorzugsweise 1 bis 8 Alkoxygruppen, insbesondere aus Ethylenoxid, Propylenoxid oder einer Mischung davon, wobei Ethylenoxid bevorzugt ist, sein. Der genannte Alkylrest im Fettalkohol kann gerade oder verzweigt sein, aliphatisch oder aromatisch, gesättigt oder ungesättigt mit vorzugsweise 1 bis 3 Doppelbindungen. Als Beispiele seien genannt: Octyl-, Decyl-, Dodecyl-, Isotridecy-, para-iso-Nonylphenyl-, para-iso-Octylphenyl- und Stearylalkohol, ferner Oleyl-, Cocosalkyl- und Talgalkylalkohol. Die Komponente b) kann auch eine Mischung aus den genannten Fettalkoholen und/oder Fettalkoholethoxylaten sein, so zum Beispiel ein Fettalkoholgemisch mit einem C₁₂-Alkylrest und C₁₄-Alkylrest (C₁₂/C₁₄-Fettalkohol).

Die Komponente b) kann weiterhin vorzugsweise ein Kalium- und/oder Natriumalkylarylsulfonat mit einer oder mehreren, vorzugsweise einer oder zwei Sulfonat-Gruppen, einer oder mehreren, vorzugsweise einer oder zwei Alkylgruppen mit 5 bis 18 C-Atomen, vorzugsweise 12 bis 18 C-Atomen, und einem oder mehreren, vorzugsweise einem oder zwei Benzolringen, sein.

Die Komponente c) umfasst Korrosionsinhibitoren, wie sie für Enteisungsmittel auf der Basis von Glykolen und Wasser gebräuchlich sind. Geeignete Korrosionsinhibitoren sind Alkalimetallphosphate, Niedrig-Alkylphosphate wie Ethylphosphat, Dimethylphosphat, Isopropylphosphat und dergleichen, Imidazole, wie 1 H-Imidazol, Methylimidazol, Benzimidazol und dergleichen und Triazole wie Benztriazol und Tolyltriazol. Es können auch Thioharnstoff, Natriumnitrat oder Butin-1,4-diol verwendet werden.

Als Komponente d) dienen natürlich vorkommende oder synthetisch erzeugte wasserlösliche Schichtsilicate. Solche können beispielsweise der Mineralfamilie der Smektite angehören, zu denen sowohl natürlich vorkommende, wie synthetisch erzeugte Hektorite und Bentonite, oder Montmorillonite zählen.

Natürliche Schichtsilicate haben beispielsweise die allgemeine Formel (Al_{(2-y)}Mg_{y})[Si₍₄₋ₓ₎AlₓO₂₀(OH)₂]⁻_{(x+y)}, wobei x und y unterschiedliche Werte annehmen können, Al³⁺ durch Mg²⁺ und Fe³⁺, sowie Si⁴⁺ durch Al³⁺ substituiert sein kann und weitere Kationen wie K⁺, Li⁺, Ca²⁺ und Mg²⁺ oder auch weitere Anionen wie F⁻ oder OH⁻ in dem Kristallgefüge eingelagert sein können.

Synthetisch erzeugte Schichtsilicate haben beispielsweise die allgemeine Formel (Si₈(MgₐLi_{b}H_{c})O₂₀(OH)_{(4-y)}F_{y}]⁻_{z}, wobei a, b, c, y und z unterschiedliche Werte annehmen können, Mg²⁺ durch Al³⁺ und Fe³⁺, sowie Si⁴⁺ durch Al³⁺ substituiert sein kann und weitere Kationen wie K⁺, Li⁺, Ca²⁺ und Mg²⁺ oder auch weitere Anionen wie F⁻ oder OH⁻ in dem Kristallgefüge eingelagert sein können.

Die Komponente e) ist vorzugsweise ein basischer pH-Regulator aus der Gruppe der Alkalimetallhydroxide wie NaOH und KOH, der Alkylamine wie Butylamin, Hexylamin, Octylamin und Isononylamin und der Alkanolamine wie Mono-, Di- und Triethanolamin. Die Alkalimetallhydroxide sind besonders bevorzugt. Enthält das erfindungsgemäße Enteisungsmittel eine solche basische Verbindung, so liegt deren Gehalt bei vorzugsweise 0,1 bis 5 Gew.-%, bezogen auf das Gewicht des Enteisungsmittels.

Die Komponente f) ist vorzugsweise ein saurer pH-Regulator aus der Gruppe der anorganischen oder organischen Säuren, wie Phosphorsäure, Phosphorige Säure, Mono- und Dicarbonsäuren mit Alkylgruppen mit 2 bis 12 C-Atomen, vorzugsweise 4 bis 8 C-Atomen, und einem oder mehreren, vorzugsweise einem oder zwei Benzolringen. Enthält das erfindungsgemäße Enteisungsmittel einen solchen sauren pH-Regulator, so liegt dessen Gehalt bei vorzugsweise 0,1 bis 5 Gew.-%, bezogen auf das Gewicht des Enteisungsmittels.

Die Komponente g) ist ein wasserlösliches Verdickungsmittel. Es werden bevorzugt vernetzte Homo- oder Copolymerisate von ungesättigten Carbonsäuren wie Acrylsäure, Methacrylsäure und deren Derivate wie Ester und Amide, ferner Celluloseether (Alkyl-, Hydroxyalkyl- und Carboxyalkylcelluloseether), Polyethylenglykole, Polyvinylpyrrolidone, Polyvinylalkohole, Polyethylenoxide, Xanthangummi und dergleichen oder Mischungen von solchen wasserlöslichen Polymeren eingesetzt. Enthält das erfindungsgemäße Enteisungsmittel ein solches Verdickungsmittel, so liegt dessen Gehalt bei vorzugsweise 0,1 bis 5 Gew.-%, bezogen auf das Gewicht des Enteisungsmittels.

Die erfindungsgemäßen Enteisungsmittel enthalten im allgemeinen mindestens 5, vorzugsweise mindestens 10 Gew.-% Wasser.

Ferner können in den Enteisungsmitteln Entschäumer, Farbstoffe, Komplexierungsmittel und Antioxidantien enthalten sein.

Die Herstellung des erfindungsgemäßen Enteisungsmittels erfolgt durch Zusammenmischen der einzelnen Komponenten in beliebiger Reihenfolge, was zum Beispiel in einem mit Rührer ausgestatteten Behälter vorgenommen werden kann.

Die Erfindung wird nun durch Beispiele erläutert:

Das Enteisungsmittel soll nach mechanischer Belastung keinen nennenswerten irreversiblen Viskositätsverlust aufweisen. Zur Untersuchung des Viskositätsverlusts im Labor dient ein Brookfield Counter Rotating Mixer, der aus zwei Scherblättern besteht, die sich in gegensätzlicher Richtung drehen. Die Scherblätter bewegen sich mit einer Umdrehungszahl von 3.500 Umdrehungen pro Minute. Beim Eintauchen des Counter Rotating Mixers in ein Flugzeugenteisungsmittel werden die Verdickermoleküle durch den engen Spalt zwischen den beiden Scherblättern hindurchgepresst, wobei sie je nach Verdickertyp irreversibel geschädigt werden können. Der dabei auftretende Viskositätsverlust führt zu einer Herabsetzung der Vorhaltezeit.

Das vollständig ausgetrocknete Enteisungsmittel soll keine Rückstände bilden, die durch Rehydratisierung zu schwerlöslichen Gelen aufquellen. Zur Untersuchung der Gelbildung werden Aluminiumbleche aus 2024-T3 Material mit einer Fläche von 100 mm x 50 mm x 1 mm verwendet. Die Oberfläche der Bleche wird durch abwechselndes kurzes Eintauchen in je Natronlauge und Salpetersäure gealtert, so dass Fluid- und Gelrückstände besser anhaften können. Das Aluminiumblech wird vier Sekunden lang vollständig in das zu untersuchende Fluid eingetaucht und anschließend bei einer Temperatur zwischen 30°C und 35°C eingetrocknet. Dieser Schritt wird nach 24 Stunden jeweils sechs mal mit dem gleichen Blech wiederholt. Innerhalb dieser ersten Testphase bildet sich allmählich ein Trockenrückstand auf der Aluminiumoberfläche.

Im zweiten Testabschnitt wird das Blech mit dem eingetrocknetem Fluidrückstand für 30 Sekunden in entmineralisiertes Wasser eingetaucht und vorsichtig wieder aus dem Wasser gezogen. Nach 60 Sekunden wird das Gewicht des Bleches mit dem gequollenem Fluidrückstand gewogen. Dieser Rehydratisierungsschritt wird insgesamt zehn mal wiederholt. Anschließend kann man über den Verlauf der Gewichtsänderung die Gelierungsneigung des Fluids beurteilen.

### Beispiel 1

Es wird zunächst ein herkömmliches SAE Typ IV-Enteisungsmittel durch Mischen der folgenden Komponenten hergestellt:

| | |
|---|---|
| 50,00 Gew.-% | 1,2-Propylenglykol |
| 0,05 Gew.-% | Tolyltriazol |
| 0,33 Gew.-% | vernetzte Polyacrylsäure |
| 0,12 Gew.-% | C_{12/16}-Fettalkohol ethoxyliert mit 6 mol Ethylenoxid |
| 0,18 Gew.-% | Natriumhydroxid |
| 48,87 Gew.-% | Wasser. |

Die Komponenten wurden durch starkes Rühren und Erhitzen auf 60°C innerhalb von 3 h gelöst. Das erhaltene Enteisungsmittel wurde hinsichtlich der Viskosität und der Scherstabilität untersucht:

| Viskosität (0,3 rpm, 20°C) (Ruheviskosität) | Viskosität (60 rpm, 20°C) (Fließviskosität) | Viskosität (0,3 rpm, 20°C), (Ruheviskosität) (nach mechanischer Belastung mittels Counter Rotating Mixer) |
|---|---|---|
| 25.000 mPas | 820 mPas | 20.100 mPas |

Bei einer Spindelumdrehungszahl von 0,3 rpm weist das Enteisungsmittel eine Viskosität von 25.000 mPas auf. Dieser Wert liegt in dem für SAE Typ IV-Enteisungsmitteln üblichen Bereich. Erhöht man die Spindelumdrehungszahl auf 60 rpm, so sinkt die Viskosität auf 820 mPas. Dieses rheologische Verhalten, das als pseudoplastisch bezeichnet wird, stellt sicher, dass das Enteisungsmittel beim Start von Flugzeugen vollständig von den Oberflächen abfließt. Belastet man dieses Enteisungsmittel mit einem Brookfield Counter Rotating Mixer (5 min/3.500 rpm) und misst die Viskosität dieser Probe nach dem Verstreichen von 5 Minuten erneut, so liegt die Ruheviskosität nur noch bei 20.100 mPas. Das Enteisungsmittel erfüllt gerade noch die Vorrausetzung eines SAE Typ IV-Enteisungsmittels bezüglich der Vorhaltezeit. Bei einer weiteren mechanischen Belastung könnte die Viskosität des Enteisungsmittels unter den dafür zulässigen Bereich absinken und es könnte somit nicht mehr zum Schutz von Flugzeugen vor Wiedervereisung eingesetzt werden.

Anschließend wird das Gelverhalten dieses Flugzeugenteisungsmittels untersucht. Dazu wird ein gealtertes Aluminiumblech vier Sekunden lang in das Enteisungsmittel eingetaucht und anschließend bei einer Temperatur von 30°C eingetrocknet. Dieser Schritt wird nach 24 Stunden jeweils sechs mal mit dem gleichen Blech wiederholt.

Anschließend wird das Blech mit dem eingetrocknetem Enteisungsmittelrückstand für 30 Sekunden in entmineralisiertes Wasser eingetaucht und vorsichtig wieder aus dem Wasser gezogen. Nach 60 Sekunden wird das Gewicht des Bleches mit dem gequollenem Enteisungsmittelrückstand gewogen. Dieser Rehydratisierungsschritt wird insgesamt zehn mal wiederholt. Anschließend kann man über den Verlauf der Gewichtsänderung die Gelierungsneigung des Enteisungsmittels beurteilen.

Bei dem unter Beispiel 1 beschriebenen Flugzeugenteisungsmittel fällt auf, dass der Trockenrückstand mit Wasser sehr stark aufquillt und sich anschließend nur schlecht von der Aluminiumplatte wieder ablöst. Würde sich solch ein Flugzeugenteisungsmittel nach dem Start in aerodynamisch ruhigen Zonen der Flugzeugtragflächen ansammeln und anschließend austrocknen, so könnten diese Rückstände stark aufquellen, falls sie mit Feuchtigkeit wie Regenwasser in Kontakt kämen. Die daraus resultierenden gelartigen Rückstände könnten bei tiefen Temperaturen, wie sie in hohen Flughöhen auftreten, einfrieren und dadurch die Höhenruder blockieren, wodurch das Flugzeug nicht mehr vollständig manövrierfähig wäre.

### Beispiel 2

Es wird nun ein erfindungsgemäßes SAE Typ II-Enteisungsmittel durch Mischen der folgenden Komponenten hergestellt:

| | |
|---|---|
| 50,00 Gew.-% | 1,2-Propylenglykol |
| 0,05 Gew.-% | Tolyltriazol |
| 0,15 Gew.-% | C₁₂/C₁₄-Fettalkohol ethoxyliert mit 5 mol Ethylenoxid |
| 1,5 Gew.-% | synthet. Hectorit (Mg_{2,67}Li_{0,33})Si₄O₁₀(OH,F)₂)Na_{0,33} × H₂O |
| 48,3 Gew.-% | Wasser. |

Die Komponenten wurden durch starkes Rühren und Erhitzen auf 60°C innerhalb von 3 h gelöst. Das erhaltene Enteisungsmittel wurde hinsichtlich der Viskosität und der Scherstabilität untersucht:

| Viskosität (0,3 rpm, 20°C) (Ruheviskosität) | Viskosität (60 rpm, 20°C) (Fließviskosität) | Viskosität (0,3 rpm, 20°C), (Ruheviskosität) (nach mechanischer Belastung mittels Counter Rotating Mixer) |
|---|---|---|
| 7.600 mPas | 190 mPas | 7.400 mPas |

Bei einer Spindelumdrehungszahl von 0,3 rpm weist das Enteisungsmittel eine Viskosität von 7.600 mPas auf. Dieser Wert liegt in dem für SAE Typ II-Enteisungsmitteln üblichen Bereich. Erhöht man die Spindelumdrehungszahl auf 60 rpm, so sinkt die Viskosität auf 190 mPas. Dieses rheologische Verhalten, das als pseudoplastisch bezeichnet wird, stellt sicher, dass das Enteisungsmittel beim Start von Flugzeugen vollständig von den Oberflächen abfließt. Belastet man nun das Enteisungsmittel mit einem Brookfield Counter Rotating Mixer (5 min/3.500 rpm) und misst die Viskosität dieser Probe nach dem Verstreichen von 5 Minuten erneut, so liegt die Ruheviskosität wiederum bei 7.400 mPas. Somit ist bewiesen, dass das Enteisungsmittel bei mechanischer Belastung, wie sie bei starker Scherbeanspruchung durch schnelllaufende Rührgeräte, Pumpen oder beim Fließen durch kleine Leitungsquerschnitte auftritt, nicht irreversibel geschädigt werden kann.

Anschließend wird das Gelverhalten dieses Flugzeugenteisungsmittels untersucht. Dazu wird ein gealtertes Aluminiumblech vier Sekunden lang in das Enteisungsmittel eingetaucht und anschließend bei einer Temperatur von 30°C eingetrocknet. Dieser Schritt wird nach 24 Stunden jeweils sechs mal mit dem gleichen Blech wiederholt.

Anschließend wird das Blech mit dem eingetrocknetem Enteisungsmittelrückstand für 30 Sekunden in entmineralisiertes Wasser eingetaucht und vorsichtig wieder aus dem Wasser gezogen. Nach 60 Sekunden wird das Gewicht des Bleches mit dem gequollenem Enteisungsmittelrückstand gewogen. Dieser Rehydratisierungsschritt wird insgesamt zehn mal wiederholt. Anschließend kann man über den Verlauf der Gewichtsänderung die Gelierungsneigung des Enteisungsmittel beurteilen.

Bei dem unter Beispiel 2 genannten Enteisungsmittel fällt deutlich auf, dass die Masse des Trockenrückstandes wesentlich geringer ist, als bei dem unter Beispiel 1 beschriebenem Enteisungsmittel. Zusätzlich kann dieser Rückstand bereits nach dem vierten Tauchvorgang mit Wasser komplett abgelöst werden. Eingetrocknete Reste dieses Flugzeugenteisungsmittels in aerodynamisch ruhigen Zonen würden mit Regenwasser keine schwerlösbaren Gele bilden, sondern rasch abgespült werden.

Weitere Untersuchungen des unter Beispiel 2 beschriebenen Flugzeugenteisungsmittels ergeben, dass alle weiteren Anforderungen der SAE-Spezifikation AMS 1428 erfüllt werden. So ist die Vereisungsschutzzeit (WSET-Test) dieses Typ II- Enteisungsmittels größer als 30 Minuten. Die 1:1-Verdünnung mit Wasser zeigt eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

### Beispiel 3

Es wird ein erfindungsgemäßes SAE Typ II-Enteisungsmittel durch Mischen der folgenden Komponenten hergestellt:

| | |
|---|---|
| 60,00 Gew.-% | Diethylenglykol |
| 0,05 Gew.-% | Benzotriazol |
| 0,1 Gew.-% | C₁₂/C₁₄-Fettalkohol ethoxyliert mit 4 mol Ethylenoxid |
| 1,7 Gew.-% | synthet. Hectorit (Mg_{2,67}Li_{0,33})Si₄O₁₀(OH,F)₂)Na_{0,33} × H₂O |
| 38,15 Gew.-% | Wasser. |

Die Komponenten wurden durch starkes Rühren und Erhitzen auf 60°C innerhalb von 3 h gelöst. Das erhaltene Enteisungsmittel wurde hinsichtlich der Viskosität und der Scherstabilität untersucht:

| Viskosität (0,3 rpm, 20°C) (Ruheviskosität) | Viskosität (60 rpm, 20°C) (Fließviskosität) | Viskosität (0,3 rpm, 20°C), (Ruheviskosität) (nach mechanischer Belastung mittels Counter Rotating Mixer) |
|---|---|---|
| 6.800 mPas | 160 mPas | 6.400 mPas |

Belastet man das Enteisungsmittel mit einem Brookfield Counter Rotating Mixer (5 min/3.500 rpm) und misst die Viskosität dieser Probe nach dem Verstreichen von 5 Minuten erneut, so liegt die Ruheviskosität bei 6.400 mPas. Somit ist bewiesen, dass das Enteisungsmittel bei starker Scherbeanspruchung keinen irreversiblen Schaden erleidet.

Die Untersuchung des Gelverhaltens dieses Flugzeugenteisungsmittels hat gezeigt, dass sich der Enteisungsmittelrückstand mit Wasser rasch abspülen lässt.

Weitere Untersuchungen des unter Beispiel 3 beschriebenen Flugzeugenteisungsmittels ergeben, dass alle weiteren Anforderungen der SAE-Spezifikation AMS 1428 erfüllt werden. So ist die Vereisungsschutzzeit (WSET-Test) dieses Typ II- Enteisungsmittels größer als 30 Minuten. Die 1:1-Verdünnung mit Wasser hat eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

### Beispiel 4

Es wird ein erfindungsgemäßes SAE Typ II-Enteisungsmittel durch Mischen der folgenden Komponenten hergestellt:

| | |
|---|---|
| 50,00 Gew.-% | 1,2-Propylenglykol |
| 0,05 Gew.-% | Tolyltriazol |
| 0,75 Gew.-% | Natriumalkylbenzolsulfonat (Natriumdodecylbenzolsulfonat) |
| 1,35 Gew.-% | synthet. Hectorit (Mg_{2,67}Li_{0,33})Si₄O₁₀(OH,F)₂)Na_{0,33} × H₂O |
| 47,85 Gew.-% | Wasser. |

Die Komponenten wurden durch starkes Rühren und Erhitzen auf 60°C innerhalb von 3 h gelöst. Das erhaltene Enteisungsmittel wurde hinsichtlich der Viskosität und der Scherstabilität untersucht:

| Viskosität (0,3 rpm, 20°C) (Ruheviskosität) | Viskosität (60 rpm, 20°C) (Fließviskosität) | Viskosität (0,3 rpm, 20°C), (Ruheviskosität) (nach mechanischer Belastung mittels Counter Rotating Mixer) |
|---|---|---|
| 6.000 mPas | 230 mPas | 5.900 mPas |

Belastet man das Enteisungsmittel mit einem Brookfield Counter Rotating Mixer (5 min/3.500 rpm) und misst die Viskosität dieser Probe nach dem Verstreichen von 5 Minuten erneut, so liegt die Ruheviskosität bei 5.900 mPas. Somit ist bewiesen, dass das Enteisungsmittel bei starker Scherbeanspruchung keinen irreversiblen Schaden erleidet.

Die Untersuchung des Gelverhaltens dieses Flugzeugenteisungsmittels hat gezeigt, dass sich der Enteisungsmitteldrückstand mit Wasser rasch abspülen lässt.

Weitere Untersuchungen des unter Beispiel 4 beschriebenen Flugzeugenteisungsmittels ergeben, dass alle weiteren Anforderungen der SAE-Spezifikation AMS 1428 erfüllt werden. So ist die Vereisungsschutzzeit (WSET-Test) dieses Typ II- Enteisungsmittels größer als 30 Minuten. Die 1:1-Verdünnung mit Wasser hat eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

### Beispiel 5

Es wird ein erfindungsgemäßes SAE Typ IV-Enteisungsmittel durch Mischen der folgenden Komponenten hergestellt:

| | |
|---|---|
| 50,00 Gew.-% | 1,2-Propylenglykol |
| 0,05 Gew.-% | Tolyltriazol |
| 0,2 Gew.-% | C_{12/16}-Fettalkohol ethoxyliert mit 6 mol Ethylenoxid |
| 2,25 Gew.-% | synthet. Hectorit (Mg_{2,67}Li_{0,33})Si₄O₁₀(OH,F)₂)Na_{0,33} x H₂O |
| 47,5 Gew.-% | Wasser. |

Die Komponenten wurden durch starkes Rühren und Erhitzen auf 60°C innerhalb von 3 h gelöst. Das erhaltene Enteisungsmittel wurde hinsichtlich der Viskosität und der Scherstabilität untersucht:

| Viskosität (0,3 rpm, 20°C) (Ruheviskosität) | Viskosität (60 rpm, 20°C) (Fließviskosität) | Viskosität (0,3 rpm, 20°C), (Ruheviskosität) (nach mechanischer Belastung mittels Counter Rotating Mixer) |
|---|---|---|
| 19.800 mPas | 450 mPas | 19.500 mPas |

Belastet man das Enteisungsmittel mit einem Brookfield Counter Rotating Mixer (5 min/3.500 rpm) und misst die Viskosität dieser Probe nach dem Verstreichen von 5 Minuten erneut, so liegt die Ruheviskosität bei 19.500 mPas. Somit ist bewiesen, dass das Enteisungsmittel bei starker Scherbeanspruchung keinen irreversiblen Schaden erleidet.

Die Untersuchung des Gelverhaltens dieses Flugzeugenteisungsmittlers hat gezeigt, dass sich der Enteisungsmittelrückstand mit Wasser rasch abspülen lässt.

Weitere Untersuchungen des unter Beispiel 5 beschriebenen Flugzeugenteisungsmittels ergeben, dass alle weiteren Anforderungen der SAE-Spezifikation AMS 1428 erfüllt werden. So ist die Vereisungsschutzzeit (WSET-Test) dieses Typ IV- Enteisungsmittels größer als 80 Minuten. Die 1:1-Verdünnung mit Wasser hat eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

### Beispiel 6

Es wird ein erfindungsgemäßes SAE Typ IV-Enteisungsmittel durch Mischen der folgenden Komponenten hergestellt:

| | |
|---|---|
| 50,00 Gew.-% | 1,2-Propylenglykol |
| 0,05 Gew.-% | Benzotriazol |
| 0,12 Gew.-% | C_{12/14}-Fettalkohol ethoxyliert mit 2 mol Ethylenoxid |
| 2,6 Gew.-% | synthet. Saponit ((Mg₃)Si₃,₇Al_{0,3})O₁₀(OH)₂)Na_{0,3} × H₂O |
| 47,23 Gew.-% | Wasser. |

Die Komponenten wurden durch starkes Rühren und Erhitzen auf 60°C innerhalb von 3 h gelöst. Das erhaltene Enteisungsmittel wurde hinsichtlich der Viskosität und der Scherstabilität untersucht:

| Viskosität (0,3 rpm, 20°C) (Ruheviskosität) | Viskosität (60 rpm, 20°C) (Fließviskosität) | Viskosität (0,3 rpm, 20°C), (Ruheviskosität) (nach mechanischer Belastung mittels Counter Rotating Mixer) |
|---|---|---|
| 12.600 mPas | 300 mPas | 12.000 mPas |

Belastet man das Enteisungsmittel mit einem Brookfield Counter Rotating Mixer (5 min/3.500 rpm) und misst die Viskosität dieser Probe nach dem Verstreichen von 5 Minuten erneut, so liegt die Ruheviskosität bei 12.000 mPas. Somit ist bewiesen, dass das Enteisungsmittel bei starker Scherbeanspruchung keinen irreversiblen Schaden erleidet.
Die Untersuchung des Gelverhaltens dieses Flugzeugenteisungsmittels hat gezeigt, dass sich der Enteisungsmittelrückstand mit Wasser rasch abspülen lässt.

Weitere Untersuchungen des unter Beispiel 6 beschriebenen Flugzeugenteisungsmittels ergeben, dass alle weiteren Anforderungen der SAE-Spezifikation AMS 1428 erfüllt werden. So ist die Vereisungsschutzzeit (WSET-Test) dieses Typ IV- Enteisungsmittels größer als 80 Minuten. Die 1:1-Verdünnung mit Wasser hat eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

### Beispiel 7

Es wird ein erfindungsgemäßes SAE Typ IV-Enteisungsmittel durch Mischen der folgenden Komponenten hergestellt:

| | |
|---|---|
| 55,00 Gew.-% | 1,2-Propylenglykol |
| 0,05 Gew.-% | Tolyltriazol |
| 0,12 Gew.-% | C_{14/16}-Fettalkohol ethoxyliert mit 6 mol Ethylenoxid |
| 0,8 Gew.-% | nat. Saponit ((Mg₃)Si_{3,7}Al_{0,3})O₁₀(OH)₂)Na_{0,3} × H₂O |
| 0,1 Gew.-% | vernetztes Natriumpolyacrylat |
| 43,93 Gew.-% | Wasser. |

Die Komponenten wurden durch starkes Rühren und Erhitzen auf 60°C innerhalb von 3 h gelöst. Das erhaltene Enteisungsmittel wurde hinsichtlich der Viskosität und der Scherstabilität untersucht:

| Viskosität (0,3 rpm, 20°C) (Ruheviskosität) | Viskosität (60 rpm, 20°C) (Fließviskosität) | Viskosität (0,3 rpm, 20°C), (Ruheviskosität) (nach mechanischer Belastungsmittels Counter Rotating Mixer) |
|---|---|---|
| 20.600 mPas | 120 mPas | 20.000 mPas |

Belastet man das Enteisungsmittel mit einem Brookfield Counter Rotating Mixer (5 min/3.500 rpm) und misst die Viskosität dieser Probe nach dem Verstreichen von 5 Minuten erneut, so liegt die Ruheviskosität bei 20.000 mPas. Somit ist bewiesen, dass das Enteisungsmittel bei starker Scherbeanspruchung keinen irreversiblen Schaden erleidet.

Die Untersuchung des Gelverhaltens dieses Flugzeugenteisungsmittels hat gezeigt, dass sich der Enteisungsmittelrückstand mit Wasser rasch abspülen lässt.

Weitere Untersuchungen des unter Beispiel 7 beschriebenen Flugzeugenteisungsmittels ergeben, dass alle weiteren Anforderungen der SAE-Spezifikation AMS 1428 erfüllt werden. So ist die Vereisungsschutzzeit (WSET-Test) dieses Typ IV- Enteisungsmittels größer als 80 Minuten. Die 1:1-Verdünnung mit Wasser hat eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

## Patentansprüche

1. Enteisungs- oder Vereisungsschutzmittel, enthaltend 35 bis 93 Gew.-% mindestens eines Glykols und 0,01 bis 15 Gew.-% mindestens eines wasserlöslichen Schichtsilicats, sowie Wasser ad 100 Gew.-%, bezogen auf das Gewicht des Enteisungsmittels.

2. Enteisungs- oder Vereisungsschutzmittel nach Anspruch 1, enthaltend 45 bis 90 Gew.-% von mindestens einem Glykol aus der Gruppe der Alkylenglykole mit 2 bis 3 C-Atomen und Oxalkylenglykole mit 4 bis 6 C-Atomen.

3. Enteisungs- oder Vereisungsschutzmittel nach Anspruch 1 und/oder 2, enthaltend bis zu 10 Gew.-%, vorzugsweise 0,02 bis 2 Gew.-%, von mindestens einem Tensid aus der Gruppe der nichtionischen oder anionischen Tenside.

4. Enteisungs- oder Vereisungsschutzmittel nach einem oder mehreren der Ansprüche 1 bis 3, enthaltend 0,01 bis 5 Gew.-%, vorzugsweise 0,02 bis 2 Gew.-%, mindestens eines Korrosionsinhibitors.

5. Enteisungs- oder Vereisungsschutzmittel nach einem oder mehreren der Ansprüche 1 bis 4, enthaltend 0,02 bis 15 Gew.-%, vorzugsweise 0,05 bis 10 Gew.-% eines wasserlöslichen Schichtsilicats.

6. Enteisungs- oder Vereisungsschutzmittel nach einem oder mehreren der Ansprüche 1 bis 5, enthaltend 0,1 bis 5 Gew.-% organische Verdickungsmittel aus der Gruppe der Homo- oder Copolymerisate von ungesättigten Carbonsäuren wie Acrylsäure, Methacrylsäure und deren Derivate wie Ester und Amide, ferner Celluloseether (Alkyl-, Hydroxyalkyl- und Carboxyalkylcelluloseether), Polyethylenglykole, Polyvinylpyrrolidone, Polyvinylalkohole, Polyethylenoxide, Xanthangummi.

7. Enteisungs- oder Vereisungsschutzmittel nach einem oder mehreren der Ansprüche 1 bis 6, enthaltend als Schichtsilikate natürlich vorkommende oder synthetisch erzeugte Hektorite, Bentonite, oder Montmorillonite.

8. Enteisungs- oder Vereisungsschutzmittel nach einem oder mehreren der Ansprüche 1 bis 7, enthaltend als Schichtsilikate Verbindungen der allgemeinen Formel (Al_{(2-y)}Mg_{y})[Si₍₄₋ₓ)AlₓO₂₀(OH)₂]⁻_{(x+y),} wobei x und y ganzzahlige Werte annehmen können, die einen Ladungsausgleich bewirken, Al³⁺ durch Mg²⁺ und Fe³⁺, sowie Si⁴⁺ durch Al³⁺ substituiert sein kann und weitere Kationen wie K⁺, Li⁺, Ca²⁺ und Mg²⁺ oder auch weitere Anionen wie F⁻ oder OH⁻ in dem Kristallgefüge eingelagert sein können.

9. Enteisungs- oder Vereisungsschutzmittel nach einem oder mehreren der Ansprüche 1 bis 7, enthaltend als Schichtsilikate Verbindungen der allgemeinen Formel [Si₈(MgₐLi_{b}H_{c})O₂₀(OH)_{(4-y)}F_{y}]⁻_{z}, wobei a, b, c, y und z ganzzahlige Werte annehmen können, die einen Ladungsausgleich bewirken, Mg²⁺ durch Al³⁺ und Fe³⁺, sowie Si⁴⁺ durch Al³⁺ substituiert sein kann und weitere Kationen wie K⁺, Li⁺, Ca²⁺ und Mg²⁺ oder auch weitere Anionen wie F⁻ oder OH⁻ in dem Kristallgefüge eingelagert sein können.

10. Verwendung von 0,01 bis 15 Gew.-% mindestens eines wasserlöslichen Schichtsilicats zur Verdickung einer Zusammensetzung, welche 35 bis 93 Gew.-% mindestens eines Glykols und Wasser ad 100 Gew.-% enthält.
